# EUROPÄISCHE PATENTSCHRIFT

(11) **EP 2 353 356 B1**
(45) Veröffentlichungstag und Bekanntmachung des Hinweises auf die Patenterteilung: **29.05.2013**
(21) Anmeldenummer: 11153939.1
(22) Anmeldetag: 10.02.2011
(51) Int. Cl.: A01C 7/00, A01C 7/20, A01C 7/12

(54) **Vorrichtung zum dosierten Ausbringen von Granulat**
Device for metered application of granulate
Dispositif de sortie dosée de granulés

(30) Priorität: 10.02.2010 DE 102010000353
(43) Veröffentlichungstag der Anmeldung: 10.08.2011
(73) Patentinhaber: Lehner Agrar GmbH, 89198 Westerstetten (DE)
(72) Erfinder: Lehner, Helmut, 89198, Westerstetten (DE)
(74) Vertreter: Baur & Weber Patentanwälte

(56) Entgegenhaltungen:
- WO-A1-2004/015378
- US-A- 4 522 340
- US-A1- 2009 078 178

## Beschreibung

Die Erfindung betrifft eine Vorrichtung zum Ausbringen von Granulat in eine landwirtschaftliche Fläche.

Es ist bekannt, beim Ausbringen von Saatgut wie z. B. Mais oder insbesondere Kartoffeln in eine Ackerfläche dem Saatgut während des Ausbringens ein Pflanzenschutzmittel in Granulatform zuzugeben. Das Granulat wird in die für das Saatgut geöffnete Furche eingebracht und beim nachfolgenden Schließen der Furche werden Saatgut und Granulat zuverlässig mit Erde überdeckt, so dass kein Granulat frei auf der Erdoberfläche liegen bleibt. Dies ist von besonderer Bedeutung zum Schutz von Wildtieren, insbesondere Vögeln, welche das typischerweise für Vögel giftige Granulat aufnehmen und daran verenden könnten.

Aus der DE 1870211 U1 ist eine Kartoffellegemaschine bekannt, an welcher eine Vorrichtung zum Zugeben von Granulat zu in eine Furche abgelegten Saatkartoffeln angebracht ist. Eine zwischen einen Vorratsbehälter für das Granulat und eine der geöffneten Furche zuweisende rohrförmige Ausgabeleitung eingefügte Dosiereinrichtung enthält eine Zellenradschleuse mit einem an die Fortbewegung der Legemaschine mechanisch gekoppelten Zellenrad, welches über zwei um 180° versetzte Zellen Granulat dosiert aus dem Vorratsbehälter zu der Ausgabeleitung überträgt.

Die WO/2004/015378 A beschreibt eine Dosiereinrichtung mit einer Mehrzahl von auf einer gemeinsamen Antriebswelle angeordneten Zellenrädern, welche ein Granulat aus einem Vorratsbehälter in eine Sammelleitung abgeben, in welcher das Granulat mittels eines Luftstroms über einen Verteiler auf eine Mehrzahl von Ausgangsleitungen abgegeben wird.

In der US 2009/0078178 ist eine an einer landwirtschaftlichen Zugmaschine betreibbare Vorrichtung zur dosierten Abgabe eines Granulats wie z. B. Saatgut oder Dünger beschrieben. Das Granulat wird mittels eines Luftstroms zu einem Verteiler gefördert und dort über mehrere Ausgänge in eine Mehrzahl schlauchförmiger Ausgabeleitungen geführt. In den Ausgängen des Verteilers sind elektrisch betätigbare Asperrschieber angeordnet.

Ein Problem kann am Ende einer Furche in der Form auftreten, dass Granulat noch bis in einen Bereich ausgegeben wird, in welchem von den nachlaufend angeordneten Einrichtungen die Furche nicht mehr zugedeckt wird oder auch noch auf einem von dem Zugfahrzeug befahrenen Flächenbereich außerhalb der Feldfläche. Während dies für das Saatgut allenfalls bedeutet, dass freiliegendes Granulat verdirbt, kann freiliegendes Granulat auch in geringen Mengen zur Vergiftung von Wildtieren führen und verschärfte Auflagen beim Ausbringen des Granulats zur Folge haben.

Der Erfindung liegt die Aufgabe zugrunde, eine Vorrichtung zum Ausbringen von Granulat in eine landwirtschaftliche Fläche mit verminderter Gefahr des Freiliegens ausgebrachten Granulats anzugeben.

Die erfindungsgemäße Lösung ist im unabhängigen Anspruch beschrieben. Die abhängigen Ansprüche enthalten vorteilhafte Ausgestaltungen und Weiterbildungen der Erfindung.

Die Rückdrehung eines Zellenrads einer Dosiereinrichtung nach Auslösen eines Stopps der Granulatausgabe verhindert zuverlässig die unbeabsichtigte Abgabe von Granulat, was insbesondere bei erst teilweise mit einer Ausgabeöffnung der Dosiervorrichtung in die Ausgabeleitung überlappenden Dosierzelle der Dosiereinrichtung durch Nachrieseln aus der noch nicht vollständig entleerten Dosierzelle auftreten könnte. Eine Rückdrehung erfolgt daher vorteilhafterweise so weit entgegen der Arbeitsdrehrichtung des Zellenrads, dass zumindest eine beim Auslösen des Ausgabestops noch nicht vollständig mit der Ausgabeöffnung überlappende Dosierzelle wieder vollständig vor die Ausgabeöffnung zurückgedreht und damit gegen die Ausgabeöffnung verschlossen wird. Vorteilhafterweise sind in Arbeitsdrehrichtung vor und nach der Ausgabeöffnung jeweils dem Umfang des Zellenrads folgende und die Dosierzellen radial nach außen abschließende Dichtflächen vorgesehen, welche sich über einen Winkel um die Drehachse erstrecken, welcher wenigstens gleich dem Zellenwinkel der vorzugsweise untereinander gleichen Dosierzellen, vorzugsweise größer als dieser Zellenwinkel ist. Als Zellenwinkel sei der Winkel um die Drehachse des Zellenrads bezeichnet, über welchen sich eine Dosierzelle erstreckt. Die Dosierzellen bilden typischerweise Vertiefungen gegen eine einhüllende Rotationsfläche um die Drehachse des Zellenrads. Es sind auch Zellenradschleusen mit scheibenförmigen Zellenrädern und axialen Durchbrüchen durch die Zellenräder als Dosierzellen bekannt.

Der Rückdrehwinkel, um welchen das Zellenrad nach dem Auslösen des Stopps der Ausgabe von Granulat zurückgedreht wird, kann in einer ersten Ausführung in der Weise von der Drehstellung des Zellenrads abhängig sein, dass die Rückdrehung so weit erfolgt, dass die bei der vorangegangenen Drehung des Zellenrads in Arbeitsdrehrichtung zuletzt noch nicht vollständig mit der Ausgabeöffnung in die Ausgabeleitung überlappende Dosierzelle wieder vollständig vor die Ausgabeöffnung entgegen der Arbeitsdrehrichtung zurückgedreht und dadurch verschlossen wird, so dass ein beim Auslösen des Stopps noch in einer solchen Dosierzelle eventuell enthaltener Rest an Granulat nicht mehr in die Ausgabeleitung abgegeben werden kann. Der Rückdrehwinkel kann dabei durch einen mit der Drehung des Zellenrads verbundenen Drehwinkelgeber oder einen Anschlag bestimmt und begrenzt sein.

In bevorzugter Ausführungsform ist der Rückdrehwinkel, um welchen die Rückdrehung des Zellenrads nach dem Auslösen des Stopps zurückgedreht wird, wenigstens gleich dem Zellenwinkel. Der Rückdrehwinkel kann insbesondere größer sein als der Zellenwinkel, so dass auch bei nur ungefährer Einhaltung des Zellenwinkels die zuletzt mit der Ausgabeöffnung überlappende Dosierzelle zuverlässig wieder vollständig vor die Ausgabeöffnung in den abgedichteten Bereich zurückgedreht und verschlossen wird.

In bevorzugter Ausführung ist das Zellenrad durch einen elektrischen Antriebsmotor drehbar angetrieben. Der elektrische Antriebsmotor ist vorteilhafterweise zur Versorgung mit elektrischer Leistung aus dem elektrischen Bordnetz eines landwirtschaftlichen Zugfahrzeugs ausgebildet und kann hierfür insbesondere auf eine Nennspannung von 12 V ausgelegt sein. Schnittstellen zur Versorgung von Anbaugeräten aus dem Bordnetz landwirtschaftlicher Zugfahrzeuge sind bekannt und gebräuchlich.

Die Rückdrehung des Zellenrads kann auf verschiedene Arten, beispielsweise auch durch einen bei Drehung in Arbeitsdrehrichtung gespannten Federspeicher oder durch Umschalten eines Getriebeelements zwischen Antriebseinrichtung und Zellenrad erfolgen. Vorzugsweise erfolgt die Rückdrehung durch Umschalten der Drehrichtung eines Antriebsmotors, wofür ein elektrischer Antriebsmotor besonders vorteilhaft geeignet ist. Die Antriebsleistung der Antriebseinrichtung wird vorteilhafterweise über eine mit der Drehachse des Zellenrads zusammen fallende Antriebswelle auf das Zellenrad geleitet.

Das Zellenrad kann in vorteilhafter Weiterbildung in Richtung seiner Drehachse in mehrere, vorzugsweise zwei Teilräder unterteilt sein, welche jeweils an ihrem Umfang eine eigene Dosierzellenstruktur aufweisen und auf dieselbe Ausgangsleitung Granulat ausgeben. Dabei sind die Dosierzellenstrukturen vorzugsweise zueinander gleich aufgebaut, aber relativ zueinander um die gemeinsame Drehachse gegeneinander verdreht und starr miteinander gekoppelt. Die derartige Unterteilung eines Zellenrads führt zu einer während der Drehung verbesserten Gleichmäßigkeit der Rate ausgegebenen Granulats. Die Dosierzellen der Teilräder überlappen einander vorteilhafterweise in zur Drehachse paralleler Projektion. Die Teilräder können Granulat über getrennte Ausgabeöffnungen auf eine gemeinsame Ausgabeleitung oder vorzugsweise über eine gemeinsame Ausgabeöffnung an die Ausgabeleitung abgeben. Bei vorzugsweise zwei Teilrädern sind die Dosierzellenstrukturen vorteilhafterweise gegeneinander auf Lücke versetzt ausgerichtet. Die Rückdrehung erfolgt dann so weit, dass die zuletzt mit der Ausgabeöffnung teilweise überlappenden Dosierzellen beider Teilräder vollständig vor die Ausgabeöffnung entgegen der Arbeitsdrehrichtung zurück gedreht werden. Bei Rückdrehung um einen Rückdrehwinkel, welcher wenigstens so groß ist wie der Zellenwinkel, ist dies immer gewährleistet.

In anderer vorteilhafter Ausführung kann im Verlauf der Ausgabeleitung eine Absperreinrichtung vorgesehen sein, welche durch das Startsignal und Stoppsignal zwischen einer Freigabestellung und einer Schließstellung verlagerbar ist. Die Verlagerung erfolgt wenigstens in einer Richtung mittels eines elektrischen Aktuators, insbesondere eines Elektromotors oder eines Elektromagneten.

Die Absperreinrichtung enthält in vorteilhafter Ausführung einen Sperrschieber, welcher als linear bewegbarer Schieber oder vorzugsweise als Drehschieber ausgebildet sein kann.

Mit dem Startsignal wird die Absperreinrichtung in die Freigabestellung gebracht, in welcher die Absperreinrichtung den Querschnitt der Ausgabeleitung freigibt, so dass von der Dosiereinrichtung in die Ausgabeleitung abgegebenes Granulat die Absperreinrichtung passieren und in die Bodenfurche abgegeben werden kann. Das Stoppsignal bewirkt eine Verlagerung der Absperreinrichtung in die Schließstellung, in welcher der Querschnitt der Ausgabeleitung vollständig für das Granulat abgesperrt ist. Mit dem Stoppsignal wird auch die Dosiereinrichtung gestoppt, so dass die Abgabe von Granulat aus der Dosiereinrichtung in die Ausgabeleitung zumindest weitgehend unterbrochen wird. Noch in der Ausgabeleitung befindliches Granulat wird an dem Sperrschieber aufgehalten und gelangt nicht mehr auf den Boden. Zusätzlich wird auch Granulat, welches aus einer erst teilweise mit der Ausgabeöffnung der Dosiereinrichtung überlappenden und noch nicht vollständig entleerten Dosierzelle eventuell noch nachrieselt, an der geschlossenen Absperreinrichtung aufgehalten und gelangt nicht mehr auf oder in den Boden. Bei Rückdrehung des Zellenrads ist ein solches Nachrieseln verhindert und der Schieber wirkt primär gegen das Ausfallen von noch in der Ausgabeleitung befindlichen Granulat.

In vorteilhafter Ausbildung kann vorgesehen sein, dass die Schließstellung der Absperreinrichtung eine stabile Ruhestellung bildet und das Startsignal einen Aktuator aktiviert, welcher die Absperreinrichtung entgegen einer Rückstellkraft aus der Schließstellung in die Freigabestellung verlagert und in dieser hält. Dabei kann das Startsignal als Haltesignal für die ganze Zeit der Granulatausgabe vorliegen. Bei Unterbrechung der Aktivierung des Aktuators durch das Stoppsignal, welches auch allein durch den Wegfall eines zuvor anliegenden Haltesignals gebildet sein kann, oder bei einer Störung der Signalverbindung von der Steuereinrichtung zu der Absperreinrichtung wird diese selbsttätig unter der Einwirkung der Rückstellkraft in die Schließstellung zurück verlagert. Eine Verlagerung von der Freigabestellung kann auch durch Aktivierung des Aktuators zu einer Rückverlagerung der Absperreinrichtung erfolgen.

Für die Erzeugung des Startsignals und des Stoppsignals in der Steuereinrichtung kann in der Steuereinrichtung vorteilhafterweise wenigstens ein manuell betätigbares Bedienelement, wie z. B. ein Taster, ein Kippschalter oder dergleichen vorgesehen sein. Es können auch für Startsignal und Stoppsignal getrennte Bedienelemente vorgesehen sein. Hierfür ist ein Bedienteil vorteilhafterweise in Bedienreichweite des Fahrers des Zugfahrzeugs anordenbar. Eine Signalverbindung zu der Dosiereinrichtung und/oder der Absperreinrichtung kann sowohl drahtlos als auch leitungsgebunden gegeben sein. Der Benutzer löst so rechtzeitig vor dem Erreichen des Endes einer neuen Furche bzw. des Feldrandes das Stoppsignal manuell aus, dass bis dahin ausgegebenes Granulat durch das mit der Vorrichtung an der Zugmaschine gehaltene Saatgerät zuverlässig mit Erde bedeckt wird. Dabei wird eventuell im letzten Abschnitt einer Saatreihe dem Saatgut kein Granulat zugegeben, was aber gegenüber dem Freilegen von Granulat nachrangig ist und auch nach bereits gebräuchlicher Vorgehensweise toleriert wird. Durch die Rückdrehung des Zellenrads oder das Schließen der Absperreinrichtung wird zuverlässig verhindert, dass Granulat aus nicht vollständig entleerten Zellen auf Bodenbereiche, welche nicht mehr mit Erde bedeckt werden und z. B. beim Wenden des Zugfahrzeugs auch außerhalb des Saatbereichs liegen könnten, ausgegeben wird. Das Stoppsignal kann z. B. manuell ausgelöst werden, wenn das Zugfahrzeug den Feldrand erreicht. Im letzten Furchenabschnitt der etwa der Länge des Zugfahrzeugs entspricht, wird dann kein Granulat mehr in die Furche gestreut.

In vorteilhafter Weiterbildung kann vorgesehen sein, dass ein Stoppsignal automatisch ausgelöst wird, wenn das Saatgerät angehoben wird. Typischerweise wird das Anheben des Saatgeräts durch den Fahrer des Zugfahrzeugs kurz vor Erreichen des Feldrandes während der Fahrt des Zugfahrzeugs ausgelöst, wofür typischerweise ein auf hydraulisch betätigte Hebeeinrichtungen zwischen Zugfahrzeug und Saatgerät wirkendes Betätigungselement manuell betätigt wird. Durch Koppeln der Steuereinrichtung mit dem Betätigungselement und/oder den Hebeeinrichtungen kann vorteilhafterweise ein Stoppsignal für die Dosiereinrichtung und/oder die Absperreinrichtung ausgelöst werden, soweit nicht bereits zuvor manuell oder auf andere Weise ein Stoppsignal erzeugt wurde.

In anderer vorteilhafter Weiterbildung kann vorgesehen sein, dass mittels eines Positioniersystems die Annäherung des Zugfahrzeugs, des Saatgeräts oder der Vorrichtung an den Feldrand detektiert wird, und dass bei Erreichen eines ersten Sicherheitsabstands ein Hinweissignal für den Fahrer erzeugt wird, damit dieser manuell ein Stoppsignal für die Dosiereinrichtung und/oder die Absperreinrichtung auslöst und/oder dass bei Erreichen eines zweiten Sicherheitsabstands, welcher von dem ersten verschieden und insbesondere kleiner sein kann, automatisch ein Stoppsignal ausgelöst wird, wenn ein solches nicht bereits zuvor auf andere Weise erzeugt wurde.

Die Ausgabeleitung ist vorzugsweise in an sich bekannter Art als Fallleitung ausgeführt, durch welche das von der Dosiereinrichtung in die Ausgabeleitung abgegebene Granulat unter Schwerkrafteinfluss nach unten fällt. Der Schwerkrafttransport des Granulats durch die Ausgabeleitung kann auch durch Druckluft als Transportmedium unterstützt sein.

Der Antrieb des Zellenrads der Dosiereinrichtung während der regulären Ausgabe von Granulat ist vorteilhafterweise an die Fahrgeschwindigkeit des Zugfahrzeugs gekoppelt. Bei der bevorzugten Ausführung mit einem elektrischen Antriebsmotor als Antriebseinrichtung für das Zellenrad wird hierfür vorteilhafterweise in der Steuereinrichtung die momentane Fahrgeschwindigkeit erfasst und die Drehgeschwindigkeit des Zellenrads bzw. des Antriebsmotors auf den für eine gleichmäßige gewünschte Rate der Abgabe von Granulat erforderlichen Wert eingestellt und nachgeführt. Die Verwendung eines drehzahlveränderlich steuerbaren Elektromotors erlaubt vorteilhafterweise auch die Veränderung einer solchen Abgabe-Rate in Abhängigkeit von verschiedenen Parametern, wie z. B. unterschiedliche Granulate, unterschiedliche Beschaffenheiten von Saatgut und/oder Boden, etc.

Die Vorrichtung zum Ausbringen von Granulat ist in besonders vorteilhafter Weise mit einer Kartoffellegemaschine als Saatgerät kombinierbar. Dabei kann in bevorzugter Ausführung vorgesehen sein, dass die Vorrichtung zwei quer zur Fahrtrichtung beabstandete Ausgabeleitungen und je ein Zellenrad zu jeder Ausgabeleitung als Dosiereinrichtung enthält. Die Zellenräder sind vorteilhafterweise auf einer gemeinsamen Antriebswelle angeordnet und um eine gemeinsame Drehachse mittels einer gemeinsamen Antriebseinrichtung drehbar. Auch die Rückdrehung bei Auftreten eines Stoppsignals erfolgt vorteilhafterweise für beide Zellenräder gemeinsam. Die Absperreinrichtungen sind bei Anordnung im Bereich der der Dosiereinrichtung abgewandten Ende der Ausgabeleitung vorzugsweise durch getrennte Aktuatoren betätigbar.

Startsignal und/oder Stoppsignal für die Absperreinrichtung können einzeln als kurze pulsförmige Signale ausgeführt sein, welche nur für den Vorgang des Wechsels der Absperreinrichtung zwischen Freigabestellung und Schließstellung erzeugt werden. Vorzugsweise wird das Startsignal von der Steuereinrichtung für die gesamte Zeit der Freigabestellung der Absperreinrichtung als Haltesignal fortgesetzt und der Wegfall des Haltesignals als Stoppsignal entsprechend der Schließstellung der Absperreinrichtung interpretiert.

Startsignal und Stoppsignal für das Zellenrad bzw. dessen Antriebseinrichtung können gleichfalls als pulsförmige Signale ausgebildet sein. Vorzugsweise ist in zu der Absperreinrichtung analoger Art das Startsignal als Haltesignal für die Dauer des regulären Ausbringens von Granulat aufrecht erhalten und der Wegfall des Haltesignals als Stoppsignal interpretiert. Das Stoppsignal löst bei der Variante des Rückdrehens des Zellenrads mittels dessen Antriebsmotor auch den für den Rückdrehwinkel erforderlichen, zeitlich begrenzten rückdrehenden Antrieb aus. Wenn der Stopp der Granulatausgabe allein durch die Absperreinrichtung erfolgt, kann die Rückdrehung entfallen und das Start- und Haltesignal entspricht in seiner Dauer der Betriebszeit der Antriebseinrichtung.

Startsignal und Stoppsignal für die Antriebseinrichtung des Zellenrads und/oder für die Absperreinrichtung sind vorzugsweise Kleinleistungssignale, welche zur Ansteuerung von Leistungs-Schaltmitteln dienen.

Die Erfindung ist nachfolgend anhand bevorzugter Ausführungsbeispiele noch eingehend veranschaulicht. Dabei zeigt:
- Fig. 1: eine Dosiereinrichtung mit einem Zellenrad,
- Fig. 2: das Ende einer Ausgabeleitung mit einer Absperreinrichtung,
- Fig. 3: eine Zellenradstellung mit teilentleerter Dosierzelle,
- Fig. 4: die Anordnung von Fig. 3 nach Rückdrehen des Zellenrads,
- Fig. 5: eine geöffnete Absperreinrichtung,
- Fig. 6: eine geschlossene Absperreinrichtung,
- Fig. 7: eine Zellenradschleuse mit zwei in Teilräder unterteilten Zellenrädern.

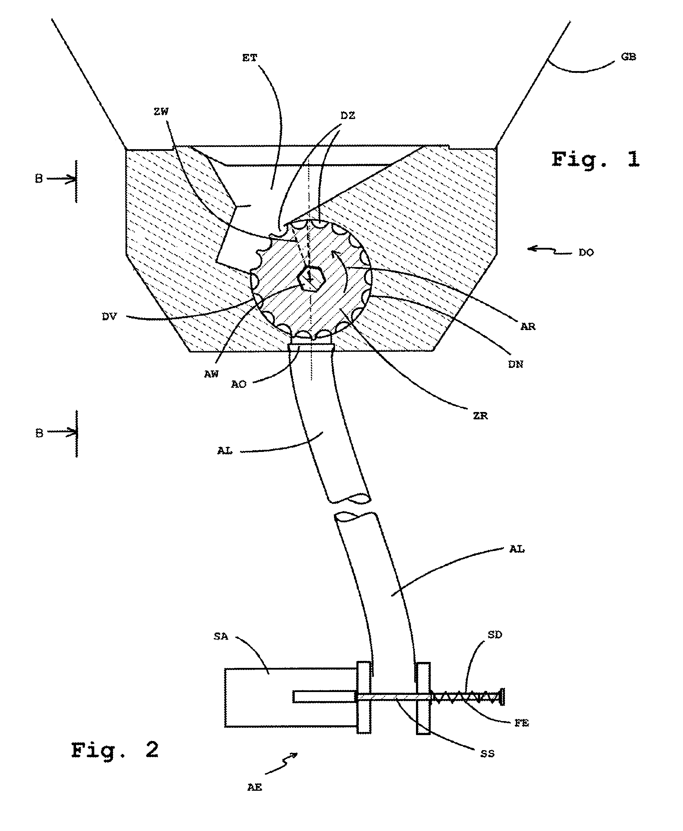

Fig. 1 zeigt eine Dosiereinrichtung DO mit einem Zellenrad ZR. Das Zellenrad ist um eine senkrecht zur Zeichenebene verlaufende Drehachse drehbar und weist an seinem Umfang eine Mehrzahl von Dosierzellen DZ als Vertiefungen gegen eine einhüllende Rotationsfläche um die Drehachse auf.

Die Dosierzellen DZ sind untereinander gleich aufgebaut und erstrecken sich jeweils über einen Zellenwinkel ZW um die Drehachse. Die Dosierzellen sind gleichmäßig über den Umfang des Zellenrades ZR verteilt angeordnet. Die Dosiereinrichtung weist einen Einlauftrichter ET auf, in welchen aus einem angedeuteten Vorratsbehälter GB auszubringendes Granulat einfällt. Das Granulat selbst ist nicht mit eingezeichnet.

In dem Einfülltrichter ET befindliches Granulat füllt die zum Einfülltrichter ET hin offenen Dosierzellen. Bei Drehen des Zellenrades ZR in Arbeitsdrehrichtung AR verlassen die mit Granulat gefüllten Dosierzellen den Bereich des Einlauf trichters ET und bewegen sich entlang einer Kreissektorfläche als erste Dichtfläche DV, welche die Dosierzellen radial nach außen abschließt, so dass in den Dosierzellen vorliegendes Granulat bei der Drehung des Zellenrades in Umfangsrichtung transportiert wird. Die Dichtfläche DV endet an einer Ausgabeöffnung AO der Dosiereinrichtung. Die Ausgabeöffnung AO erstreckt sich im skizzierten Beispiel in Umfangsrichtung über ungefähr zwei benachbarte Dosierzellen des Zellenrades. Die Dosierzellen im Bereich der Ausgabeöffnung AO sind nach unten offen, so dass das Granulat aus diesen Zellen in eine an die Ausgabeöffnung AO anschließende Ausgabeleitung AL fällt und in dieser unter Schwerkrafteinrichtung nach unten in Richtung des Endes der Ausfallleitung bewegt wird und in einen unterhalb des Ausgangs der Ausgabeleitung befindlichen Bodenabschnitt ausgebracht wird.

In Arbeitsteilrichtung AR anschließend an die Ausgabeöffnung AO folgt eine weitere Dichtfläche DN, welche wiederum die Dosierzellen radial nach außen abschließt.

Die Zwischenwandstege zwischen benachbarten Dosierzellen sind in an sich bekannter Weise als Dichtungen ausgeführt, welche einen für das Granulat undurchlässigen Spalt gegen die Dichtflächen DV bzw. DN bilden oder in Form elastischer Dichtungselemente elastisch verformt an den Dichtflächen DV, DN anliegen. Hierdurch wird verhindert, dass Granulat aus dem Bereich des Einlauftrichters ET unkontrolliert entlang des Umfangs des Zellenrads in Richtung der Ausgabeöffnung AO gelangen kann.

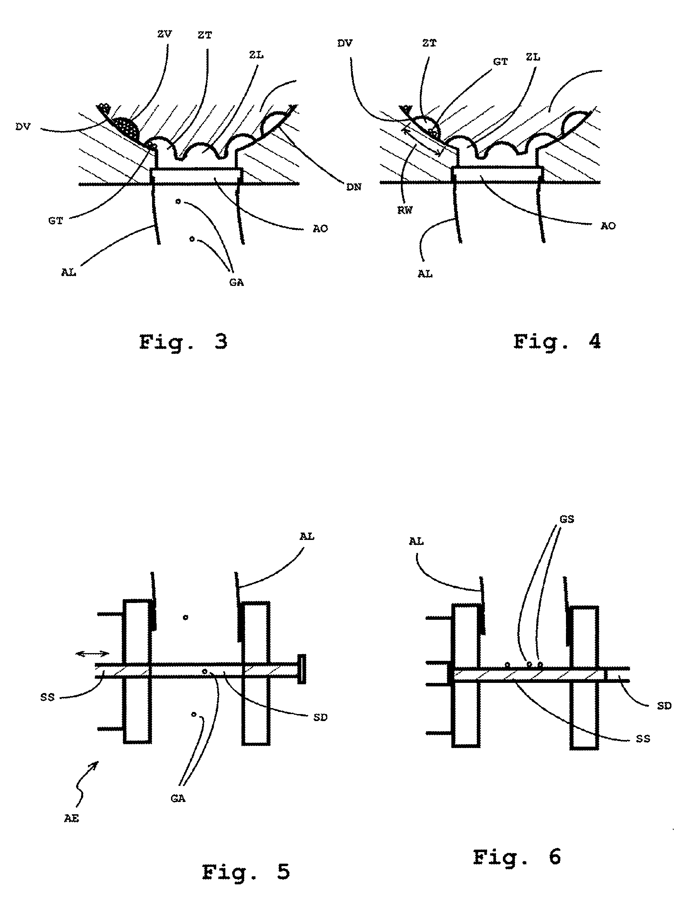

Die Drehung des Zellenrades ZR wird über eine nicht mit eingezeichnete Antriebseinrichtung bewerkstelligt, welche über eine Antriebswelle AW drehend auf das Zellenrad ZR einwirkt. Durch fortgesetzte Drehung des Zellenrades werden in den Bereich des Einlauf trichters ET eintretende leere Dosierzellen mit Granulat gefüllt, solche gefüllten Zellen werden entlang der ersten Dichtfläche DV in Richtung der Ausgabeöffnung AO bewegt und über dieser entleert und die entleerten Zellen wandern wieder entlang der weiteren Dichtfläche DN in Richtung des Einlauf trichters ET. Dosiereinrichtungen nach dem Zellenradprinzip sind prinzipiell bekannt und gebräuchlich. Wesentlich für die vorliegende Erfindung ist die Möglichkeit, das Zellenrad entgegen der eingezeichneten Arbeitsdrehrichtung AR um einen begrenzten Winkel zurückzudrehen, wie anhand von Fig. 3 und Fig. 4 noch näher erläutert ist.

Fig. 3 zeigt eine Drehposition des Zellenrades ZR, in welcher dieses in seiner Drehbewegung in Arbeitsdrehrichtung AR gestoppt ist. In der in Fig. 3 dargestellten Position überlappt eine Dosierzelle ZT erst teilweise mit der Ausgabeöffnung AO, so dass restliches Granulat GT noch in dieser Zelle vorhanden sein kann, ohne nach unten auszufallen. Bereits aus der Zelle ZT ausgefallenes Granulat ist mit GA bezeichnet und fällt unter Schwerkrafteinfluss durch die Ausgangsleitung AL nach unten.

Würde das Zellenrad ZR in dieser Position belassen, so könnte das in der Zelle verbleibende Restgranulat GT durch Erschütterungen beim Fahrbetrieb des die Vorrichtung tragenden Zugfahrzeugs, beispielsweise beim Wenden über einem Ackerrand, noch aus der Dosierzelle ZT ausfallen und frei auf der Bodenfläche liegen bleiben.

Gemäß der Erfindung ist vorgesehen, das Zellenrad ZR nach einem Stopp der Drehbewegung in Arbeitsdrehrichtung AR aus der in Fig. 3 dargestellten Drehstellung entgegen der Arbeitsdrehrichtung um einen Rückdrehwinkel RW zurückzudrehen, so dass das Zellenrad dann die in Fig. 4 dargestellte Drehstellung einnimmt. In der in Fig. 4 dargestellten Drehstellung nach Rückdrehen des Zellenrads ZR um den Rückdrehwinkel RW ist die teilgefüllte Zelle ZT wieder vollständig durch die Dichtfläche DV radial nach außen abgeschlossen und das restliche Granulat GT in der Zelle ZT kann nicht aus der Zelle ZT ausfallen, solange das Zellenrad ZR nicht wieder in der regulären Arbeitsdrehrichtung AR weiter gedreht wird.

Eine der Zelle ZT in Arbeitsdrehrichtung vorauseilend benachbarte Dosierzelle ZL ist in Fig. 3 bereits vollständig mit der Ausgabeöffnung überlappend und daher leer. Auch die in Umfangsrichtung der Zelle ZT weiter vorauseilenden und bereits im Bereich der weiteren Dichtfläche DN befindlichen Dosierzellen sind leer. Eine der Dosierzelle in Arbeitsdrehrichtung nachfolgend benachbarte Dosierzelle ZV ist noch vollständig mit Granulat gefüllt.

Nach dem Rückdrehen des Zellenrads ZR um den Rückdrehwinkel RW in die in Fig. 4 dargestellte Position befinden sich in teilweiser oder vollständiger Überlappung mit der Ausgabeöffnung über dieser lediglich Dosierzellen, welche vollständig entleert sind, so dass kein weiteres Granulat in die Ausgabeöffnung AO und die Ausgabeleitung AL ausfallen kann, solange die in Fig. 4 dargestellte Position des Zellenrades beibehalten bleibt.

In Fig. 2 ist ein unterer Endbereich der Ausgabeleitung AL dargestellt, an welchem gemäß einer zweiten Variante der Erfindung eine Absperreinrichtung AE angeordnet ist. Die Absperreinrichtung AE enthalte im dargestellten Beispiel einen linearen Sperrschieber SS, welcher in Fig. 2 in einer Schließstellung dargestellt ist, in welcher der Querschnitt der Ausgabeleitung, zu welcher in diesem Sinne auch die Fortsetzung der hohlen Ausgabeleitung AL in der Ausgabeeinrichtung AE gezählt sei, für das Granulat undurchlässig verschlossen ist.

Der Sperrschieber SS ist beispielsweise als linear quer zur Ausfallrichtung des Granulats verschiebbarer Sperrschieber ausgeführt, welcher über einen Aktuator SA aus der in Fig. 2 dargestellten Schließstellung durch Verschieben nach links in eine Stellung gebracht werden kann, in welcher eine Schieberöffnung SD mit der Ausgabeleitung fluchtend angeordnet ist und Granulat durchfallen kann. Die Verschiebung des Sperrschiebers SS aus der in Fig. 2 dargestellten Schließstellung in eine in Fig. 5 dargestellte Freigabestellung kann in einer vorteilhaften Ausführungsform entgegen einer Rückstellkraft erfolgen, welche beispielsweise durch eine Feder FE aufgebracht ist. Die Rückstellkraft bewirkt, dass nach Wegfall der den Schieber in die Freigabestellung verschiebenden Kraft des Aktuators der Schieber selbsttätig wieder in die Schließstellung zurück verlagert wird.

In Fig. 5 ist ein Ausschnitt des Endes der Ausgabeleitung AL mit der Absperreinrichtung in der Freigabestellung der Absperreinrichtung dargestellt, in welcher Granulat GA durch die Schieberöffnung nach unten in Richtung einer Bodenfurche ausfallen kann. Die Feder FE ist in dieser Darstellung nicht mit eingezeichnet.

In Fig. 6 ist die Schließstellung des Sperrschiebers SS dargestellt, in welcher dieser mit einer Sperrfläche den Querschnitt der Ausgangsleitung AL verschließt, so dass eventuell von Seiten der Dosiereinrichtung noch in die Ausgabeleitung AL fallendes Granulat auf der Oberseite der Sperrfläche des Schiebers als Restgranulat GS liegen bleibt und nicht auf den Boden gelangen kann. Die Schieberöffnung SD liegt außerhalb des Querschnitts der Ausgabeleitung AL.

In vorteilhafter, nicht dargestellter Ausführungsform kann der Sperrschieber als Drehschieber ausgeführt sein, welcher einen um eine Schieberachse drehbaren Sperrkörper, beispielsweise ein Rohr oder eine Kugel enthält. Der Sperrkörper weist in für Drehschieber an sich bekannter Ausführung eine quer zur Schieberachse verlaufende Durchgangsöffnung auf, welche in der Freigabestellung mit dem Endbereich der Ausgabeleitung fluchtend ausgerichtet ist und aus der Freigabestellung um die Schieberachse um 90° gedreht werden kann, so dass die Durchgangsöffnung senkrecht zur Längsachse der Ausgangsleitung verläuft und eine Seitenfläche des Sperrkörpers stromaufwärts der Ausgabeleitung weist und diese absperrt. Eventuell noch in der Ausgabeleitung vorhandenes oder nachrieselndes Granulat bleibt auf dieser Seitenfläche des Sperrkörpers liegen. Der Drehschieber kann wiederum in beide Drehrichtungen zwischen Freigabestellung und Sperrstellung bzw. umgekehrt motorisch betätigt sein oder, analog zu der beschriebenen Ausführung des geraden Schiebers durch eine Federkraft in der Sperrstellung als Ruhestellung gehalten sein und aus dieser Sperrstellung entgegen der Rückstellkraft der Feder motorisch in die Freigabestellung bewegbar sein.

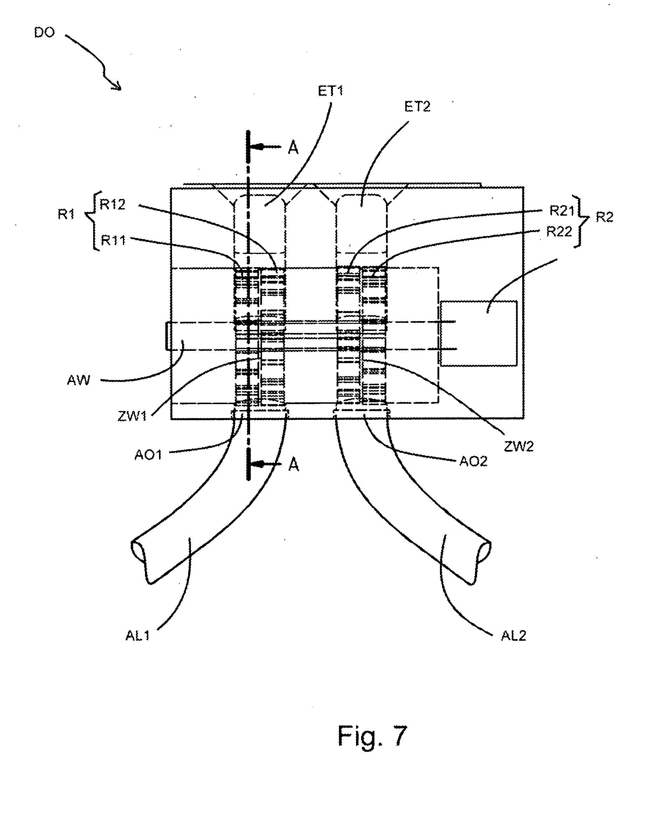

Fig. 7 zeigt die Dosiereinrichtung nach Fig. 1 in einer in Fig. 1 mit B - B angedeuteten Ansicht senkrecht zur Drehachse der Antriebswelle AW. Die Dosiereinrichtung DO enthält in diesem Fall Zellenräder zur getrennten Beaufschlagung von zwei Ausgangsleitungen AL1, AL2. Diese sind an Ausgabeöffnungen AO1 bzw. AO2 der Dosiervorrichtung DO angeschlossen. Die Dosiereinrichtung weist zu jeder der beiden Ausgangsleitungen AL1, AL2 bzw. Ausgangsöffnungen AO1, AO2 ein getrenntes Zellenrad R1 bzw. R2 auf. Dabei sind die beiden Zellenräder R1, R2 jeweils bezüglich der Drehachse der Antriebswelle AW axial in zwei Teilräder R11, R12 für das Zellenrad Z1 bzw. R21, R22 für das Zellenrad Z2 unterteilt. Die Zellenanordnung des Teilrades R11 ist um die Antriebswelle AW gegenüber der Zellenanordnung des Teilrades R12 um einen Winkel verdreht, welche dem Teilungswinkel der in Umfangsrichtung periodisch wiederholten Zellenstruktur um die Drehachse entspricht und um die Stärke der Trennwand zwischen benachbarten Dosierzellen größer ist als der Zellenwinkel. Die Zellenanordnungen der Teilräder R11 und R12 stehen dann in zur Antriebswelle AW paralleler Projektion auf Lücke zueinander. Entsprechendes gilt für die Teilräder R21, R22 des zweiten Zellenrades. Die Teilräder eines Zellenrades sind axial durch Zwischenwände ZW 1 bzw. ZW2 voneinander getrennt, so dass Granulat nicht in axialer Richtung zwischen den Teilrädern wandern kann. Im skizzierten Beispiel liegen die beiden Teilräder eines Zellenrads jeweils dicht beieinander und sind aus jeweils einem gemeinsamen Einfülltrichter ET1 für das Zellenrad R1 bzw. ET2 für das Zellenrad R2 mit Granulat gespeist. Die beiden Teilräder R11, R12 des Zellenrades R1 geben Granulat über die gemeinsame Ausgabeöffnung A01 in die Ausgabeleitung AL1 im Betrieb ab. In entsprechender Weise geben die beiden Teilräder R21, R22 des Zellenrads R2 Granulat über die gemeinsame Ausgabeöffnung A02 in die Ausgabeleitung AL2 ab. In anderer Ausführung können die Teilräder eines Zellenrads axial auch weiter voneinander beabstandet sein und/oder Granulat über separate Ausgabeöffnungen, welche danach wieder in eine gemeinsame Ausgangsleitung geführt werden, abgeben. Auch wenn Teilräder axial weiter voneinander beabstandet sind, sei die Gesamtheit der auf eine Ausgangsleitung gemeinsam Granulat abgebenden Teilräder als ein Zellenrad im Sinne der Erfindung verstanden.

Die Antriebswelle AW ist für beide Zellenräder Z1, Z2 bzw. alle Teilräder R11, R12, R21, R22 gemeinsam und wird durch einen Antriebsmotor AW angetrieben, wobei vorteilhafterweise auch die Rückdrehung durch Drehrichtungsumkehr des Antriebsmotors erfolgt. Mit A - A ist in Fig. 7 die Schnittebene für die Darstellung nach Fig. 1 bezeichnet.

Die Maßnahmen der Rückdrehung des Zellenrads ZR und des Absperrschiebers können vorzugsweise auch gemeinsam realisiert sein.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Vorrichtung zum Ausbringen eines Granulats in eine landwirtschaftliche Fläche, insbesondere eines Pflanzenschutzmittels mit Mitteln zum Anbau an eine landwirtschaftliche Zugmaschine, mit einem Vorratsbehälter (GB), wenigstens einer Ausgabeleitung (AL), einer Dosiereinrichtung (DO) zwischen Vorratsbehälter (GB) und Ausgabeleitung (AL) und einer Steuereinrichtung, mittels welcher ein Startsignal und ein Stoppsignal zum Start bzw. Stopp der Ausgabe des Granulats aus der Ausgabeleitung (AL) auslösbar ist, wobei die Dosiereinrichtung (DO) eine Zellenradschleuse mit wenigstens einem um eine Drehachse drehbaren Zellenrad (ZR) umfasst, welches eine Mehrzahl von um die Drehachse verteilt angeordneten Dosierzellen (DZ) aufweist, welche sich jeweils über einen Zellenwinkel (ZW) um die Drehachse erstrecken, wobei das Zellenrad (ZR) während der Ausgabe des Granulats durch eine Antriebseinrichtung in einer Arbeitsdrehrichtung (AR) drehbar ist, **dadurch gekennzeichnet, dass** bei Auslösen eines Stoppsignals automatisch eine Rückdrehung des Zellenrads (ZR) entgegen der Arbeitsdrehrichtung (AR) um einen begrenzten Rückdrehwinkel (RW) erfolgt,

2. Vorrichtung nach Anspruch 1, **dadurch gekennzeichnet, dass** die Antriebseinrichtung einen elektrischen Antriebsmotor enthält.

3. Vorrichtung nach Anspruch 2, **dadurch gekennzeichnet, dass** der elektrische Antriebsmotor zur Versorgung aus dem elektrischen Bordnetz des Zugfahrzeugs ausgebildet ist.

4. Vorrichtung nach Anspruch 2 oder 3, **dadurch gekennzeichnet, dass** der elektrische Antriebsmotor für die Rückdrehung in der Drehrichtung umkehrbar ist.

5. Vorrichtung nach einem der Ansprüche 1 bis 4, **dadurch gekennzeichnet, dass** der Rückdrehwinkel (RW) wenigstens gleich dem Zellenwinkel ist (ZW).

6. Vorrichtung nach einem der Ansprüche 1 bis 4, **dadurch gekennzeichnet, dass** der Rückdrehwinkel (RW) von der Drehstellung des Zellenrads (ZR) zum Zeitpunkt des Beginns der Rückdrehung abhängig ist und die Rückdrehung zumindest um einen solchen Rückdrehwinkel (RW) erfolgt, dass die bei der Drehung in Arbeitsrichtung (AR) zuletzt mit einer Ausgabeöffnung (AO) zu der Ausgabeleitung (AL) überlappende Zelle (ZT) wieder vollständig vor der Ausgabeöffnung (AO) liegt.

7. Vorrichtung nach einem der Ansprüche 1 bis 6, **dadurch gekennzeichnet, dass** das Zellenrad (ZR) in mehrere Teilräder unterteilt ist, welche Granulat auf dieselbe Ausgabeleitung ausgeben.

8. Vorrichtung nach Anspruch 7, **dadurch gekennzeichnet, dass** die Teilräder axial gegeneinander versetzt auf einer gemeinsamen Antriebswelle (AW) angeordnet sind.

9. Vorrichtung nach Anspruch 7 oder 8, **dadurch gekennzeichnet, dass** das Zellenrad (R1, R2) in axialer Richtung in zwei Teilräder (R11, R12; R21, R22) aufgeteilt ist, deren Zellenanordnungen um einen halben Zellenwinkel gegeneinander verdreht sind.

10. Vorrichtung nach einem der Ansprüche 1 bis 9, **dadurch gekennzeichnet, dass** die Dosiereinrichtung zwei Zellenräder (R1, R2) enthält, welche je einer von zwei getrennten Ausgabeleitungen (AL1, AL2) zugeordnet sind.

11. Vorrichtung nach Anspruch 10, **dadurch gekennzeichnet, dass** die beiden
Zellenräder (R1, R2) axial gegeneinander versetzt auf einer gemeinsamen Antriebswelle (AW) angeordnet und durch eine gemeinsame Antriebseinrichtung antreibbar sind.

12. Vorrichtung nach einem der Ansprüche 1 bis 11, **dadurch gekennzeichnet, dass** die Ausgabeleitung über den größten Teil ihrer Erstreckung schlauchförmig oder rohrförmig ist.

## Claims

1. Device for application of a granulate to an agricultural area, in particular a plant protection agent, with means for attaching to an agricultural tractor, with a storage container (GB), at least one discharge line (AL), a metering device (DO) between the storage container (GB) and discharge line (AL), and a control device, by means of which a start signal and a stop signal for starting or stopping the discharge of the granulate from the discharge line (AL) can be triggered, wherein the metering device (DO) comprises a cell-wheel sluice with at least one cell wheel (ZR) which is rotatable about an axis of rotation and has a plurality of metering cells (DZ) which are distributed about the axis of rotation and each extend about the axis of rotation by a cell angle (ZW), wherein the cell wheel (ZR) is rotatable by a driving device in a working direction of rotation (AR) during the discharge of the granulate, **characterized in that**, when a stop signal is triggered, the cell wheel (ZR) is automatically reverse rotated by a limited reverse angle of rotation (RW) counter to the working direction of rotation (AR).

2. Device according to Claim 1, **characterized in that** the drive device contains an electric drive motor.

3. Device according to Claim 2, **characterized in that** the electric drive motor is designed for supply from the electrical supply system of the towing vehicle.

4. Device according to Claim 2 or 3, **characterized in that** the electric drive motor is reversible in the direction of rotation for the reverse rotation.

5. Device according to one of Claims 1 to 4, **characterized in that** the reverse angle of rotation (RW) is at least equal to the cell angle (ZW).

6. Device according to one of Claims 1 to 4, **characterized in that** the reverse angle of rotation (RW) is dependent on the rotational position of the cell wheel (ZR) at the beginning of the reverse rotation, and the reverse rotation takes place at least by such a reverse angle of rotation (RW) that the cell (ZT) overlapping last with a discharge opening (AO) to the discharge line (AL) during rotation in the working direction (AR) again lies completely in front of the discharge opening (AO).

7. Device according to one of Claims 1 to 6, **characterized in that** the cell wheel (ZR) is divided into a plurality of sub-wheels which discharge granulate to the same discharge line.

8. Device according to Claim 7, **characterized in that** the sub-wheels are arranged axially offset in relation to one another on a common drive shaft (AW).

9. Device according to Claim 7 or 8, **characterized in that** the cell wheel (R1, R2) is divided in the axial direction into two sub-wheels (R11, R12; R21, R22), the cell arrangements of which are rotated by half a cell angle in relation to one another.

10. Device according to one of Claims 1 to 9, **characterized in that** the metering device contains two cell wheels (R1, R2) which are assigned in each case to one of two separate discharge lines (AL1, AL2).

11. Device according to Claim 10, **characterized in that** the two cell wheels (R1, R2) are arranged offset axially in relation to each other on a common drive shaft (AW) and are driveable by a common drive device.

12. Device according to one of Claims 1 to 11, **characterized in that** the discharge line is in the form of a hose or tube over most of the extent thereof.

## Revendications

1. Dispositif pour décharger des granulés sur une surface agricole, en particulier un agent phytosanitaire, comprenant des moyens de montage sur un tracteur agricole, comprenant un réservoir de stockage (GB), au moins un conduit de déchargement (AL), un dispositif de dosage (DO) entre le réservoir de stockage (GB) et le conduit de déchargement (AL) et un dispositif de commande, au moyen duquel un signal de démarrage et un signal d'arrêt pour le démarrage, respectivement l'arrêt du déchargement des granulés hors du conduit de déchargement (AL) peut être déclenché, le dispositif de dosage (DO) comprenant une écluse à roue cellulaire avec au moins une roue cellulaire (ZR) pouvant tourner autour d'un axe de rotation, laquelle présente une pluralité de cellules de dosage (DZ) réparties autour de l'axe de rotation, lesquelles s'étendent à chaque fois suivant un angle de cellule (ZW) autour de l'axe de rotation, la roue cellulaire (ZR), pendant le déchargement des granulés, pouvant être entraînée en rotation dans un sens de rotation de travail (AR) par un dispositif d'entraînement, **caractérisé en ce que** lors du déclenchement d'un signal d'arrêt, une rotation de retour de la roue cellulaire (ZR) dans le sens inverse du sens de rotation de travail (AR) a lieu automatiquement suivant un angle de rotation de retour limité (RW).

2. Dispositif selon la revendication 1, **caractérisé en ce que** le dispositif d'entraînement contient un moteur d'entraînement électrique.

3. Dispositif selon la revendication 2, **caractérisé en ce que** le moteur d'entraînement électrique est réalisé pour être alimenté à partir du réseau de bord électrique du tracteur.

4. Dispositif selon la revendication 2 ou 3, **caractérisé en ce que** le sens de rotation du moteur d'entraînement électrique peut être inversé pour la rotation de retour.

5. Dispositif selon l'une quelconque des revendications 1 à 4, **caractérisé en ce que** l'angle de rotation de retour (RW) est au moins égal à l'angle de cellule (ZW).

6. Dispositif selon l'une quelconque des revendications 1 à 4, **caractérisé en ce que** l'angle de rotation de retour (RW) dépend de la position de rotation de la roue cellulaire (ZR) à l'instant du début de la rotation de retour, et la rotation de retour a lieu au moins suivant un angle de rotation de retour (RW) tel que la cellule (ZT) chevauchant en dernier une ouverture de déchargement (AO) vers le conduit de déchargement (AL) lors de la rotation dans le sens de travail (AR) soit située à nouveau complètement avant l'ouverture de déchargement (AO).

7. Dispositif selon l'une quelconque des revendications 1 à 6, **caractérisé en ce que** la roue cellulaire (ZR) est divisée en plusieurs roues partielles, qui déchargent des granulés dans le même conduit de déchargement.

8. Dispositif selon la revendication 7, **caractérisé en ce que** les roues partielles sont disposées sur un arbre d'entraînement commun (AW) de manière décalée axialement les unes par rapport aux autres.

9. Dispositif selon la revendication 7 ou 8, **caractérisé en ce que** la roue cellulaire (R1, R2) est divisée dans la direction axiale en deux roues partielles (R11, R12 ; R21, R22), dont les agencements cellulaires sont tournés les uns par rapport aux autres d'un demi angle de cellule.

10. Dispositif selon l'une quelconque des revendications 1 à 9, **caractérisé en ce que** le dispositif de dosage contient deux roues cellulaires (R1, R2) qui sont associées chacune à l'un de deux conduits de déchargement séparés (AL1, AL2).

11. Dispositif selon la revendication 10, **caractérisé en ce que** les deux roues cellulaires (R1, R2) sont disposées sur un arbre d'entraînement commun (AW) de manière décalée axialement l'une par rapport à l'autre et peuvent être entraînées par un dispositif d'entraînement commun.

12. Dispositif selon l'une quelconque des revendications 1 à 11, **caractérisé en ce que** le conduit de déchargement est en forme de tuyau ou de tube sur la majeure partie de son étendue.
